# EUROPÄISCHE PATENTSCHRIFT

(11) **EP 3 200 034 B1**
(45) Veröffentlichungstag und Bekanntmachung des Hinweises auf die Patenterteilung: **30.10.2019**
(21) Anmeldenummer: 16153052.2
(22) Anmeldetag: 28.01.2016
(51) Int. Cl.: G05B 19/05, H04L 29/08

(54) **ZUGRIFF AUF DATEN ODER FUNKTIONEN EINER SPEICHERPROGRAMMIERBAREN STEUERUNG MITTELS EINES WEBDIENSTES**
ACCESSING DATA OR FUNCTIONS OF A PROGRAMMABLE LOGIC CONTROLLER BY MEANS OF A WEB-SERVICE
ACCÈS AUX DONNÉES OU AUX FONCTIONS D'UN AUTOMATE PROGRAMMABLE INDUSTRIEL À L'AIDE D'UN SERVICE WEB

(43) Veröffentlichungstag der Anmeldung: 02.08.2017
(73) Patentinhaber: Siemens Aktiengesellschaft, 80333 München (DE)
(72) Erfinder: KREMER, Eugen, 91058 Erlangen (DE)

(56) Entgegenhaltungen:
- EP-A1- 2 506 098
- WO-A1-2010/099802
- WO-A1-2013/087940
- US-A1- 2003 065 855
- Christoph Stoidner ET AL: "Sequence-Controlled Web Services for Programmable Logic Controllers", 13th IFAC Symposium on Information Control Problems in Manufacturing, 3. Juni 2009 (2009-06-03), Seiten 1-6, XP55236495, DOI: 10.3182/20090603-3-RU-2001.00065 Gefunden im Internet: URL:http://www.dsi.fceia.unr.edu.ar/downlo ads/informatica/info_iii/plcsoa.pdf [gefunden am 2015-12-15]

## Beschreibung

Die Erfindung betrifft ein Verfahren zum Zugriff auf Daten oder Funktionen einer speicherprogrammierbaren Steuerung mittels eines Netzwerkprotokolls gemäß dem Oberbegriff des Patentanspruchs 1, und einer speicherprogrammierbare Steuerung mit Zugriff auf deren Daten oder Funktionen mittels eines Netzwerkprotokolls gemäß dem Oberbegriff des Patentanspruchs 7.

Auf Daten oder Funktionen einer speicherprogrammierbaren Steuerung, beispielsweise Produktionsdaten, Zustandsinformationen, Steuerungsparameter und dergleichen wird klassischerweise mittels eines Bedien- und Beobachtungsgerätes zugegriffen, welches in der Regel eine grafische Benutzeroberfläche zur Überwachung und zur Bedienung eines automatisierten Prozesses oder dergleichen aufweist. Die Bedien- und Beobachtungsgeräte sind in der Regel über ein Datennetzwerk mit der speicherprogrammierbaren Steuerung verbunden. Der Zugriff auf die Daten oder Funktionen der speicherprogrammierbaren Steuerung geschieht i.d.R. mittels proprietärer Protokolle aus dem Automatisierungsumfeld. Neben diesen Daten- oder Funktionenzugriffen in mehr oder weniger geschlossenen Architekturen und Systemen wird vermehrt gefordert, die Daten einer speicherprogrammierbaren Steuerung allgemein zugänglich zu machen, insbesondere über das Internet und unter Nutzung der dort gebräuchlichen Protokolle wie z. B. HTTP. Zu diesem Zweck ist es bekannt, die speicherprogrammierbaren Steuerungen mit Webservern auszustatten, die entsprechende Anfragen von Clients (Web-Browsern, Mobiltelefon-Applikationen etc.) bedienen.

Aus der Druckschrift WO2013/087940A1 - Neubert et al. "Bewertung einer Nutzung einer von einem Web-Service bereitgestellten oder aufgerufenen Leistung und/oder Funktion" ist es bekannt, den Aufruf und die Nutzung von Web-Services einer Automatisierungskomponente extern zu erfassen und für Abrechnungszwecke zu verwenden.

Die Veröffentlichung EP 2 506 098 A1 - Ünver et al. "Anordnung und Verfahren für den Betrieb einer industriellen Automatisierungsanordnung mit einer Mehrzahl programmierbarer Automatisierungskomponenten und einer Mehrzahl Automatisierungsprogramme" zeigt ein Verfahren zur Lastverteilung, wobei von einer Anzahl Computer mit jeweils einer virtuellen Maschine jeweils Informationen über freie Ressourcen abgerufen werden.

Die Publikation US 2003/0065855 A1 - Webster "Imbedded Interrupt" zeigt die Verarbeitung von mehreren hierarchisch organisierten Unterbrechungsanforderungen in einer industriellen Steuerung.

Ein Problem bei der üblichen Verwendung von Web-Servern in speicherprogrammierbaren Steuerungen besteht darin, dass der in die speicherprogrammierbare Steuerung integrierte Web-Server die Daten mit dem Automatisierungsprogramm (SPS-Programm) austauschen muss bzw. dessen Funktionen aufrufen muss, wobei jedoch in der Regel ein Web-Server keinen direkten Zugriff auf Funktionen, Variablen und Parameter eines Automatisierungsprogramms haben kann oder soll. Daher wird gebräuchlicher weise für das Automatisierungsprogramm ein zusätzlicher Datenbaustein definiert, ein sogenannter "Control-Datenbaustein". Für das Automatisierungsprogramm wird dann zusätzlich ein spezieller Code-Baustein ("WWW-Baustein") definiert, der in jedem Zyklus zwingend aufgerufen wird und die auszutauschenden Daten in den Control-Datenbaustein hineinschreibt bzw. aus diesem ausliest. Nachteilig an diesem Verfahren ist jedoch, dass es zum einen auch in den Fällen, in denen keine Daten aktuell ausgetauscht werden sollen, durch Aufruf des "WWW-Bausteins" eine permanente Last erzeugt wird und zum anderen der Datenaustausch fest an den Ausführungszyklus des Automatisierungsprogramms gebunden ist und somit häufig nur verzögert erfolgen kann. Der gezielte Aufruf von Funktionen der Speicherprogrammierbaren Steuerung ist damit überhaupt nicht möglich.

Neben dem geschilderten Zugriff mittels Web-Server in der speicherprogrammierbaren Steuerung ist es auch bekannt, der speicherprogrammierbaren Steuerung Befehle und Parameter mittels des OPC-UA-Protokolls zuzuleiten und auf demselben Wege Daten von der speicherprogrammierbaren Steuerung zu einem OPC-UA-Client-Gerät zu leiten, was jedoch den Aufbau einer OPC-UA-Client/Server-Architektur erfordert und daher mit hohem Aufwand verbunden ist. Zudem bestehen auch bei diesem Ansatz Probleme bzgl. des zyklenorientierten Datenaustauschs zwischen dem lokalen OPC-UA-Server der speicherprogrammierbaren Steuerung und dem Automatisierungsprogramm.

Es besteht also ein Bedarf an einer einfachen und sicheren Lösung zum Zugriff auf die Daten einer speicherprogrammierbaren Steuerung mittels eines Netzwerkprotokolls, die eine durch den Datenzugriff mögliche Überlastung der speicherprogrammierbaren Steuerung verhindert und die weitgehend unabhängig vom Zyklus des Automatisierungsprogramms arbeitet.

Es ist eine Kernidee der erfindungsgemäßen Lösung dieser Aufgabe, dass eine speicherprogrammierbare Steuerung ausgewählte Programmbausteine des Automatisierungsprogramms als Teile eines Webdienstes zur Verfügung stellt. Externe Anwendungen, beispielsweise Web-Browser oder Applikationen auf anderen datentechnischen Geräten, können mittels eines Netzwerkprotokolls, beispielsweise HTTP, diese ausgewählten Programmbausteine aufrufen. Eine in der speicherprogrammierbaren Steuerung integrierte Verwaltungsinstanz (Task-Scheduler) entscheidet dann je nach Auslastung der speicherprogrammierbaren Steuerung, wann diese über das Netzwerk eingegangenen Anfragen bearbeitet werden. Die dabei aufgerufenen Programmbausteine des Automatisierungsprogramms können sowohl interne Werte (Daten, Variablen, Parameter) auslesen, als auch diese verändern. Zudem können damit gezielt Funktionen des Automatisierungsprogramms aufgerufen werden, also beispielsweise Funktionen gestartet oder beendet werden. Die von dem Web-Server manipulierten Daten können also nicht nur Parameter, Variablen und dergleichen - also allgemein Anwenderdaten - betreffen, sondern auch Befehle, Funktionalitäten, Methoden und dgl. - allgemein "Funktionen" - betreffen und somit die Steuerung eines Funktionsablaufs oder dgl. betreffen.

Die Aufgabe wird insbesondere durch ein Verfahren gemäß dem Patentanspruch 1 und durch eine speicherprogrammierbare Steuerung gemäß dem Patentanspruch 7 gelöst.

Dabei ist ein Verfahren zum Zugriff auf Daten oder Funktionen einer speicherprogrammierbaren Steuerung mittels eines Netzwerkprotokolls vorgesehen, wobei die Daten in einer Datenbasis der speicherprogrammierbaren Steuerung gespeichert sind und die Datenbasis einem Anwendungsprogramm der speicherprogrammierbaren Steuerung zugeordnet ist, und wobei durch einen Client mittels des Netzwerkprotokolls auf einen Web-Server der speicherprogrammierbaren Steuerung zugegriffen wird. Dabei wird zumindest ein Programmbaustein, der sowohl Funktionsaufrufe als auch direkte Zugriffe auf die Datenbasis enthalten kann, des Automatisierungsprogramms der speicherprogrammierbaren Steuerung einem Web-Dienst des Web-Servers zugeordnet, wobei durch den Web-Dienst eine Ausführung des Programmbausteins initiiert wird. In einer Ausgestaltung kann dabei durch den Programmbaustein ein Zugriff auf die Daten der speicherprogrammierbaren Steuerung erfolgen, wobei beispielsweise entweder zumindest ein vom Web-Dienst bereitgestellter Parameter als die Daten in die Datenbasis geschrieben werden, oder die Daten aus der Datenbasis ausgelesen und als der Parameter an den Web-Dienst übergeben werden, oder eine Funktion aufgerufen werden kann, oder eine Mischform dieser Aktionen erfolgen kann. Damit ist ein flexibler und einfach zu bewerkstelligender Zugriff auf Daten oder Funktionen der speicherprogrammierbaren Steuerung möglich, wobei der Zugriff auf die Daten und Funktionen auch lastabhängig gesteuert werden kann.

Die Lösung der Aufgabe sieht außerdem eine speicherprogrammierbare Steuerung mit Zugriff auf deren Daten oder Funktionen mittels eines Netzwerkprotokolls vor, wobei die Daten in einer Datenbasis der speicherprogrammierbaren Steuerung gespeichert sind, und wobei die speicherprogrammierbare Steuerung einen Web-Server zum Zugriff auf die Daten oder Funktionen aufweist. Dabei ist die speicherprogrammierbaren Steuerung dazu eingerichtet, dass zumindest ein Programmbaustein, der eine Funktion enthalten kann oder eine Funktion adressiert, eines Automatisierungsprogramms einem Web-Dienst des Web-Servers zugeordnet ist, wobei der Web-Dienst zur Initiierung der Ausführung des Programmbausteins konfiguriert ist, und wobei der Programmbaustein vorteilhaft zum Zugriff auf die Daten und/oder weitere Funktionen eingerichtet ist, wobei vorteilhaft vorgesehen ist, dass entweder zumindest ein vom Web-Dienst bereitgestellter Parameter als die Daten in die Datenbasis geschrieben werden, oder zumindest ein Teil der Daten aus der Datenbasis ausgelesen und als der Parameter an den Web-Dienst übergeben werden, oder eine weitere Funktion ausgelöst werden kann, oder eine Mischform dieser Aktionen erfolgen kann. Durch eine solche speicherprogrammierbare Steuerung können die bereits anhand des erfindungsgemäßen Verfahrens erläuterten Vorteile realisiert werden.

Bei speicherprogrammierbaren Steuerungen ist es in der Regel wichtig, dass eine vorgegebene maximale Zykluszeit eingehalten wird. Damit dieses Kriterium eingehalten werden kann, wird durch eine Verwaltungseinrichtung der speicherprogrammierbaren Steuerung stets entschieden, ob ein mittels des Web-Zugriffs initiierter Aufruf des entsprechenden Programmbausteins situationsbedingt erfolgt, oder nicht.

Dazu ist es von Vorteil, wenn diese Verwaltungseinrichtung Kenntnisse über die im oder vor/nach dem laufenden Zyklus verfügbare freie Rechenzeit und Kenntnisse über die aufzurufenden Programmbausteine hat. Letztere Informationen können durch eine Messung der Ausführungsdauer bei vorangegangenen Aufrufen dieser Programmbausteine gewonnen werden. Somit kann vorteilhaft je nach Auslastung der speicherprogrammierbaren Steuerung die Entscheidung über die Bearbeitung der Netzwerkanfrage getroffen werden. In einer weiteren vorteilhaften Ausgestaltung können die mittels des Netzwerkprotokolls eingegebenen Anfragen auch verschiedenen Prioritätsklassen angehören, wobei je nach derzeitiger Auslastung der speicherprogrammierbaren Steuerung entweder alle oder beispielsweise nur hoch-priore Anfragen bearbeitet werden.

Vorteilhafte Ausgestaltungen des erfindungsgemäßen Verfahrens bzw. der erfindungsgemäßen speicherprogrammierbaren Steuerung sind auch in den abhängigen Patentansprüchen angegeben. Die dabei beschriebenen Merkmale und deren Vorteile können sowohl einzeln, als auch in freier Kombination miteinander realisiert werden.

In einer vorteilhaften Ausgestaltung der Erfindung kann die Ausführung des Programmbausteins im Falle einer Initiierung durch die externe Anfrage dann erfolgen, sobald ein Ablauf des Automatisierungsprogramms einen Kontrollpunkt, also einen definierten Ausführungspunkt, erreicht hat, oder sobald der Ablauf des Automatisierungsprogramms einen anderweitigen definierten Zustand erreicht hat, beispielsweise einen Zyklusbeginn oder ein Zyklusende des zyklenbasierten Automatisierungsprogramms. Dabei können auch mehrere Kontrollpunkte vorgesehen sein, so dass in einem einzigen Zyklus mehrfach die Gelegenheit besteht, Anfragen durch das Abarbeiten der vordefinierten Programmbausteine zu bearbeiten. Entsprechend ist vorteilhaft einerseits ein Speicher oder Register oder "Flag" für offene Anfragen vorgesehen, und andererseits sind vorteilhaft System-Codebausteine vorgesehen, die vom Anwenderprogramm aufgerufen werden und die einen entsprechenden Rückgabewert an das Anwenderprogramm liefern, durch den das sofortige Abarbeiten der anstehenden Anfragen ausgelöst wird, indem beispielsweise die entsprechenden Funktionen zur Ausführung gebracht werden.

In einer anderen Ausführungsform kann die initiierte Ausführung des Programmbausteins unverzüglich mittels Unterbrechung eines zu diesem Zeitpunkt ablaufenden Teils des Automatisierungsprogramms erfolgen, also beispielsweise durch einen sogenannten "Interrupt". Die Anzahl der möglichen Interrupts pro Zyklus kann dabei jedoch beschränkt werden; außerdem kann die Zulassung eines Interrupts auch an Bedingungen geknüpft sein, beispielsweise auch an eine derzeitige Auslastung der speicherprogrammierbaren Steuerung.

Vorteilhaft wird als der Client ein Web-Browser oder eine Applikation eines mobilen Endgerätes oder ein Cloud-basierter Dienst verwendet. Somit wird die speicherprogrammierbare Steuerung für allgemein übliche Geräte der Computertechnik und Unterhaltungselektronik zugänglich, womit ein weites Feld von möglichen Anwendungen eröffnet wird, beispielsweise Home-Automation, mobile Fertigungskontrolle etc.

Vorteilhaft wird als die Datenbasis ein Datenbaustein des Automatisierungsprogramms verwendet. Dadurch ist es unnötig, separate Datenfelder, Variablen oder Datenspeicher für die Zwecke des Datenaustauschs zwischen der speicherprogrammierbaren Steuerung und einen über das Netzwerkprotokoll zugreifenden Client zu erstellen. Darüber hinaus hat dies den Vorteil, dass die Beantwortung von Anfragen über das Netzwerkprotokoll in einer originären Programmiersprache der speicherprogrammierbaren Steuerung ausprogrammiert werden kann, so dass ein Programmierer des Anwendungsprogramms mit seinen üblichen Kenntnissen und Werkzeugen arbeiten kann. Zudem hat das den Vorteil, dass die Kontrolle über die Daten beim Automatisierungsprogramm verbleibt, so dass in einem Programmbaustein des Automatisierungsprogramms auch eine Zugriffskontrolle, Nutzerauthentifizierung etc. für die Web-basierten Anfragen vorgenommen werden kann.

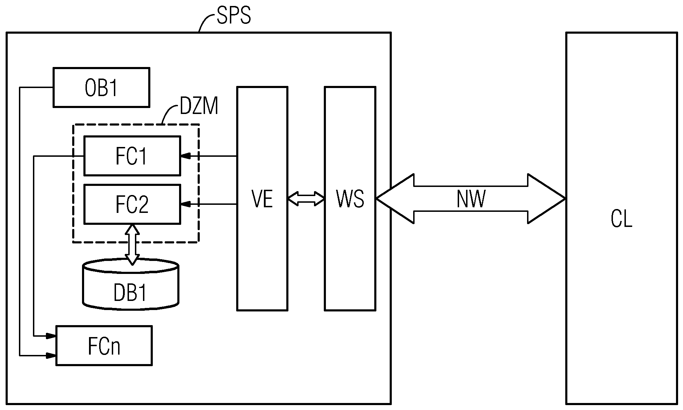

Ein Ausführungsbeispiel des erfindungsgemäßen Verfahrens und der erfindungsgemäßen speicherprogrammierbaren Steuerung wird nachfolgend anhand der Zeichnung erläutert.

Dabei zeigt die einzige Figur in schematischer Darstellung die für den Datenaustausch wesentlichen Bausteine einer erfindungsgemäßen Architektur.

In der Figur ist schematisch eine Anordnung aus einer speicherprogrammierbaren Steuerung SPS und einem Client CL dargestellt, die über ein Netzwerk NW mit Hilfe eines Internet-Protokolls (beispielsweise HTTP) Daten miteinander austauschen. Der Client CL kann dabei ein Computer mit einem Web-Browser, ein mobiles Gerät (Tablet-PC, Smartphone, Laptop-Computer o.ä.) mit einer Applikation ("App"), ein Cloud-basierter Dienst oder eine andere mittels eines Internet-Protokolls Daten austauschende Entität sein, beispielsweise ein Bedien- und Beobachtungsgerät für eine industrielle Anwendung.

Die speicherprogrammierbare Steuerung SPS ist eine Mikroprozessor-gesteuerte Komponente, die beispielsweise in einer industriellen Automatisierungsanordnung, einem gesteuerten industriellen Prozess, in der Gebäudeautomatisierung oder in einer anderen Steuerungsaufgabe zum Einsatz kommt. Die speicherprogrammierbare Steuerung SPS ist mit einem Web-Server WS ausgerüstet, der über das Netzwerk NW und mittels eines Internet-Protokolls Daten mit dem Client CL austauscht. Der Web-Server WS ist innerhalb der speicherprogrammierbaren Steuerung SPS mit einer Verwaltungseinrichtung VE verknüpft, welche den Datenaustausch zwischen dem Web-Server WS und einem Automatisierungsprogramm koordiniert; die Verwaltungseinrichtung VE kann wegen ihrer zeitlichen Koordinierungsfunktion auch als "Scheduler" (to schedule something [englisch] = etwas planen, terminieren, disponieren) bezeichnet werden.

In der linken Hälfte des Blocks für die speicherprogrammierbare Steuerung SPS sind verschiedene Bausteine eines industriellen Automatisierungsprogramms dargestellt, anhand derer im Folgenden ein Datenzugriff des Clients CL über das Netzwerk NW und dem Web-Server WS bzw. der Verwaltungseinrichtung VE erläutert werden soll.

Ein Automatisierungsprogramm wird regelmäßig zyklenbasiert ausgeführt, d.h., dass die für eine Steuerungsaufgabe wichtigen Programmbestandteile in einem festen Zeitraster zyklisch wiederholt abgearbeitet werden. Für die Zyklensteuerung kann ein Programmbaustein OB1 (Organisationsbaustein 1) zuständig sein, der im Raster des Zyklus abgearbeitet wird und von dem aus andere Programmbestandteile, beispielsweise Funktionen, Funktionsbausteine und Aufrufe für die Funktionen bzw. Funktionsbausteine, sogenannte "function calls" (FC), angesteuert werden. Ein Automatisierungsprogramm umfasst weiterhin regelmäßig sogenannte Datenbausteine (DB), in denen Variablen und Parameter des Automatisierungsprogramms zusammengefasst sein können, wobei in der hier gezeigten Darstellung ein einziger Datenbaustein DB1 exemplarisch gezeigt ist.

Im Folgenden soll ein lesender Zugriff des Clients CL auf Daten des Datenbausteins DB1 diskutiert werden; ein schreibender Zugriff bzw. ein gemischter lesender und schreibender Zugriff kann jedoch in analoger Weise erfindungsgemäß geschehen.

Während einer Projektierungsphase einer industriellen Automatisierungsanordnung bzw. während einer Programmierung der speicherprogrammierbaren Steuerung SPS werden einzelne Programmbausteine FC1, FC2 bzw. Aufrufe für solche Programmbausteine als Funktionen, die beispielsweise Methoden enthalten können oder solche sind, zum Aufruf durch den Webserver freigegeben, d.h., dass diese Programmbausteine bzw. Funktionsaufrufe FC1, FC2 von einer Instanz, die selbst nicht zum Automatisierungsprogramm gehört, aufgerufen (z.B. gestartet) werden können. Diese Instanz ist im vorliegenden Fall der Web-Server WS, wobei die vom Web-Server WS initiierten Aufrufe der Funktionen zum Direktzugriff DZM, hier also die Programmbausteine FC1, FC2, ggf. durch die Verwaltungseinrichtung VE erlaubt, untersagt oder zeitlich gesteuert bzw. verzögert werden können. Prinzipiell kann also der Aufruf der Programmbausteine FC1, FC2 zwar asynchron zum jeweiligen Zyklus des Automatisierungsprogramms geschehen, jedoch durch die Verwaltungseinrichtung VE beispielsweise unterdrückt werden, wenn die Funktionalität des Automatisierungsprogramms ansonsten gefährdet wäre, oder aber einen solchen Aufruf solange verzögern, bis der Zyklus des Automatisierungsprogramms einen entsprechenden Zustand erreicht hat, beispielsweise Zyklenbeginn, Zyklusende oder das Erreichen eines Kontrollpunkts, also eines vordefinierten Ausführungsstandes des Automatisierungsprogramms.

Ein Client CL kann den mit dem Aufruf bzw. einer Anfrage zu adressierenden Programmbaustein FC1, FC2 sowie die dabei zu adressierenden Daten (z.B. Variablen) in einer URL kodieren, sodass sich ein definierter Aufrufpfad für den entsprechenden Programmbaustein FC1, FC2 ergibt. Eine solche URL wird beispielsweise mittels des HTTP-Protokolls über das Netzwerk NW an den Web-Server WS der speicherprogrammierbaren Steuerung SPS übermittelt und dort ausgewertet ("zerlegt"). Aus den Informationen der URL generiert der Web-Server WS nun einen Aufruf für einen der Programmbausteine FC1, FC2; in einem ersten Beispiel soll davon ausgegangen werden, dass der Programmbaustein FC2 aufgerufen wird. Die Verwaltungseinrichtung VE kann diesen Aufruf nun freigeben, beispielsweise in dem Fall, in dem ein Zyklus des Automatisierungsprogramms zu Ende gegangen ist und noch genügend Rechenzeit bis zum Beginn des nächstens Zyklus zur Abarbeitung des Auftrags verbleibt. Aus dem Automatisierungsprogramm wird also nun der freigegebene Programmbaustein FC2 ausgeführt, der beispielsweise auf den Datenbaustein DB1 zugreifen kann und dort die mittels der Anfrage spezifizierten Variablen auslesen kann. Die dabei gewonnenen Informationen können an den Web-Server WS übermittelt werden, der diese Informationen beispielsweise in ein gewünschtes Format (z.B. JSON, XML) umsetzt und diese an den Client CL übermittelt, der seinerseits die Daten in eine Web-Seite, eine Applikation ("App") oder einen Cloud-Speicher ("Cloud-Persistence") übernimmt, oder umgekehrt.

In einem zweiten Beispiel wird durch eine ähnliche Anfrage der Programmbaustein FC1 aufgerufen, der jedoch nicht selbst direkt auf einen Datenbaustein zugreift, sondern einen weiteren Programmbaustein FCn des Automatisierungsprogramms aufruft, der selbst jedoch nicht für den direkten Zugriff durch den Web-Server freigegeben ist und deswegen hier indirekt durch den Baustein FC1 aufgerufen wird. In der Folge können durch den Programmbaustein FCn beispielsweise gewünschte Aktionen ausgeführt werden oder Daten an den aufrufenden Programmbaustein FC1 zurückübermittelt werden, die dann an den Web-Server weitergereicht werden können oder dergleichen. In der Figur ist weiterhin dargestellt, dass der Programmbaustein FCn auch durch die "Hauptschleife", also den Organisationsbaustein OB1, aufgerufen werden kann.

Zusammengefasst lässt sich sagen, dass mittels der skizzierten Mechanismen ein asynchroner Aufruf von Funktionen (z.B. Programmbausteine, Function Calls, Methoden) eines Automatisierungsprogramms möglich ist, wobei die speicherprogrammierbare Steuerung SPS mittels der Verwaltungseinrichtung VE dann lastabhängig oder anhand anderer Kriterien über die Ausführung entscheiden kann. Parameter aus diesen Aufrufen ("requests") können mit dem Datenspeicher der speicherprogrammierbaren Steuerung ausgetauscht werden, insbesondere mit Datenbausteinen. Wichtig ist in diesem Zusammenhang, dass die sogenannte "business-logic" zur Ausführung der Aufrufe auf Seiten des Automatisierungsprogramms implementiert ist, somit durch den Programmierer des Automatisierungsprogramms mittels einer für Automatisierungsprogramme vorgesehenen und damit dem Programmierer geläufigen Programmiersprache ausprogrammiert werden können und somit der gesamte Datenaustausch auch unter Kontrolle des Automatisierungsprogramms geschieht. Der in der speicherprogrammierbaren Steuerung SPS integrierte Web-Server WS ist erfindungsgemäß in der Lage, über HTTP oder andere Netzwerkprotokolle aufgerufene Pfade (z.B. URL) den entsprechenden Programmbausteinen zuzuordnen. Darüber hinaus werden vorteilhafterweise Zugangsdaten überprüft. Ein übergebener bzw. angeforderter Parameter wird an den jeweils aufgerufenen Programmbaustein FC1, FC2 weitergegeben. Dort geschehen ggf. eine Validierung und eine Typumwandlung. Ein etwaiger Ausgabeparameter (bei lesendem Zugriff) wird dem Protokoll entsprechend an den Aufrufer, letztlich an den Client CL, versendet. Dazu gehört, dass ggf. Werte in Zeichenketten umgewandelt werden, so dass je nach Anfrage-Protokoll die Antwort als JSON (Java Script Object Notation) oder xml (extensible markup language) oder in einer anderen Notierung erfolgt.

Anwendungsbeispiele einer solchen Architektur sind beispielsweise Smarthome-Lösungen (Steuerung von Rollläden, Licht etc. in der Gebäudeautomatisierung), Verpackungslinien (Austausch von Durchsatzzahlen etc.) und andere Anwendungen, bei denen auf einfache Art und Weise herkömmliche Clients CL an eine speicherprogrammierbare Steuerung SPS angebunden werden sollen. Spezielle Technologien wie OPC-UA werden dabei nicht benötigt.

## Patentansprüche

1. Verfahren zum Zugriff auf Daten oder Funktionen einer speicherprogrammierbaren Steuerung (SPS) mittels eines Netzwerkprotokolls,
wobei die Daten in einer Datenbasis (DB1) der speicherprogrammierbaren Steuerung (SPS) gespeichert sind und die Datenbasis (DB1) einem Automatisierungsprogramm der speicherprogrammierbaren Steuerung (SPS) zugeordnet ist, und
wobei durch einen Client (CL) mittels des Netzwerkprotokolls auf einen Web-Server der speicherprogrammierbaren Steuerung (SPS) zugegriffen wird, wobei zumindest ein Programmbaustein (FC1, FC2) des Automatisierungsprogramms der speicherprogrammierbaren Steuerung (SPS) einem Web-Dienst des Web-Servers (WS) zugeordnet wird,
wobei durch den Web-Dienst eine Ausführung des Programmbausteins (FC1, FC2) initiiert wird, wobei durch eine Verwaltungseinrichtung (VE) der speicherprogrammierbaren Steuerung (SPS) entschieden wird, ob der initiierte Aufruf des Programmbausteins (FC1, FC2) erfolgen soll oder nicht und wobei die Entscheidung anhand einer Auslastung der speicherprogrammierbaren Steuerung (SPS) getroffen wird.

2. Verfahren nach Patentanspruch 1,
**dadurch gekennzeichnet,**
**dass** durch den Programmbaustein (FC1, FC2) ein Zugriff auf die Daten der speicherprogrammierbaren Steuerung (SPS) erfolgt,
wobei entweder zumindest ein vom Web-Dienst bereitgestellter Parameter als Daten in die Datenbasis (DB1) geschrieben wird, oder die Daten aus der Datenbasis (DB1) ausgelesen und als der Parameter an den Web-Dienst übergeben werden, oder beides.

3. Verfahren nach einem der vorhergehenden Patentansprüche,
**dadurch gekennzeichnet,**
**dass** die Ausführung des Programmbausteins (FC1, FC2) im Falle einer Initiierung dann erfolgt, sobald ein Ablauf des Automatisierungsprogramms einen Kontrollpunkt oder einen definierten Zustand, insbesondere einen Zyklusbeginn oder ein Zyklusende, erreicht hat.

4. Verfahren nach einem der vorhergehenden Patentansprüche,
**dadurch gekennzeichnet,**
**dass** zur Ausführung des Programmbausteins (FC1, FC2) ein zu diesem Zeitpunkt ablaufender Teil des Automatisierungsprogramms unterbrochen wird.

5. Verfahren nach einem der vorhergehenden Patentansprüche,
**dadurch gekennzeichnet,**
**dass** der Client (CL) einen Web-Browser oder eine Applikation für ein mobiles Endgerät oder ein Cloud-basierter Dienst verwendet.

6. Verfahren nach einem der vorhergehenden Patentansprüche,
**dadurch gekennzeichnet,**
**dass** die Datenbasis (DB1) einen Datenbaustein des Automatisierungsprogramms verwendet.

7. Speicherprogrammierbare Steuerung mit Zugriff auf Daten oder Funktionen mittels eines Netzwerkprotokolls, wobei die Daten in einer Datenbasis (DB1) der speicherprogrammierbaren Steuerung (SPS) gespeichert sind, und die Datenbasis (DB1) einem Automatisierungsprogramm der speicherprogrammierbaren Steuerung (SPS) zugeordnet ist, und wobei die speicherprogrammierbare Steuerung (SPS) einen Web-Server zum Zugriff auf die Daten oder Funktionen aufweist, wobei die speicherprogrammierbare Steuerung (SPS) dazu eingerichtet ist, dass zumindest ein Programmbaustein (FC1, FC2) des Automatisierungsprogramms einem Web-Dienst des Web-Servers zugeordnet ist,
wobei der Web-Dienst zur Initiierung der Ausführung des Programmbausteins (FC1, FC2) konfiguriert ist,
dass die speicherprogrammierbare Steuerung (SPS) eine Verwaltungseinrichtung (VE) aufweist,
wobei die Verwaltungseinrichtung (VE) dazu eingerichtet ist, den initiierten Aufruf des Programmbausteins (FC1, FC2) durchzuführen oder freizugeben, oder nicht, und
dass die Verwaltungseinrichtung (VE) dazu eingerichtet ist, die Entscheidung über den Aufruf des Programmbausteins (FC1, FC2) anhand einer Auslastung der speicherprogrammierbaren Steuerung (SPS) zu treffen.

8. Speicherprogrammierbare Steuerung nach Patentanspruch 7,
**dadurch gekennzeichnet,**
**dass** der Programmbaustein (FC1, FC2) zum Zugriff auf die Daten eingerichtet ist,
wobei vorgesehen ist, dass entweder zumindest ein vom Web-Dienst bereitgestellter Parameter als Daten in die Datenbasis (DB1) geschrieben werden, oder zumindest ein Teil der Daten aus der Datenbasis (DB1) ausgelesen und als der Parameter an den Web-Dienst übergeben werden, oder beides.

9. Speicherprogrammierbare Steuerung nach einem der Patentansprüche 7 bis 8,
**dadurch gekennzeichnet,**
**dass** die speicherprogrammierbare Steuerung (SPS) derart eingerichtet ist, dass die initiierte Ausführung des Programmbausteins (FC1, FC2) dann erfolgt, sobald ein Ablauf des Automatisierungsprogramms einen Kontrollpunkt erreicht hat oder ein Zyklus des Automatisierungsprogramms einen definierten Zustand erreicht hat, insbesondere einen Zyklusbeginn oder einen Zyklusende.

10. Speicherprogrammierbare Steuerung nach einem der Patentansprüche 7 bis 9,
**dadurch gekennzeichnet,**
**dass** die speicherprogrammierbare Steuerung (SPS) zur Unterbrechung eines zu diesem Zeitpunkt ablaufenden Teils des Automatisierungsprogramms für die Ausführung des Programmbausteins (FC1, FC2) eingerichtet ist.

11. Speicherprogrammierbare Steuerung nach einem der Patentansprüche 7 bis 10,
**dadurch gekennzeichnet,**
**dass** der Web-Server zur Kommunikation mit einem Web-Browser oder einer Applikation eines mobilen Endgerätes oder eines Cloud-basierten Dienstes als der Client (CL) eingerichtet ist.

12. Speicherprogrammierbare Steuerung nach einem der Patentansprüche 7 bis 11,
**dadurch gekennzeichnet,**
**dass** die Datenbasis (DB1) ein Datenbaustein des Automatisierungsprogramms ist.

## Claims

1. Method for accessing data or functions of a programmable controller (SPS) by means of a network protocol,
the data being stored in a database (DB1) of the programmable controller (SPS) and the database (DB1) being assigned to an automation program of the programmable controller (SPS), and
a web server of the programmable controller (SPS) being accessed by a client (CL) by means of the network protocol,
at least one program module (FC1, FC2) of the automation program of the programmable controller (SPS) being assigned to a web service of the web server (WS),
execution of the program module (FC1, FC2) being initiated by the web service,
a decision being made by an administration device (VE) of the programmable controller (SPS) whether the initiated call of the program module (FC1, FC2) should or should not take place the decision being made with the aid of a workload of the programmable controller (SPS).

2. Method according to Patent Claim 1,
**characterized in that**
access to the data of the programmable controller (SPS) is carried out by the program module (FC1, FC2),
either at least one parameter provided by the web service being written into the database (DB1) as describing data,
or the data being read out from the database (DB1) and transmitted as the parameter to the web service, or both.

3. Method according to one of the preceding patent claims,
**characterized in that**
the execution of the program module (FC1, FC2) is carried out in the event of an initiation as soon as a run of the automation program has reached a checkpoint or a defined state, in particular a cycle start or a cycle end.

4. Method according to one of the preceding patent claims,
**characterized in that**,
in order to execute the program module (FC1, FC2), a part of the automation program running at this time is interrupted.

5. Method according to one of the preceding patent claims,
**characterized in that**
the client (CL) uses a web browser or an application for a mobile terminal or a cloud-based service.

6. Method according to one of the preceding patent claims,
**characterized in that**
the database (DB1) uses a data module of the automation program.

7. Programmable controller having access to data or functions by means of a network protocol,
the data being stored in a database (DB1) of the programmable controller (SPS), and the database (DB1) being assigned to an automation program of the programmable controller (SPS), and the programmable controller (SPS) having a web server for access to the data or functions,
the programmable controller (SPS) being adapted so that at least one program module (FC1, FC2) of the automation program is assigned to a web service of the web server,
the web service being configured in order to initiate the execution of the program module (FC1, FC2),
that the programmable controller (SPS) has an administration device (VE),
the administration device (VE) being adapted to carry out or enable the initiated call of the program module (FC1, FC2), or not, and
that the administration device (VE) is adapted to make the decision regarding the call of the program module (FC1, FC2) with the aid of a workload of the programmable controller (SPS) .

8. Programmable controller according to Patent Claim 7,
**characterized in that**
the program module (FC1, FC2) is adapted for access to the data,
provision being made that either at least one parameter provided by the web service is written into the database (DB1) as describing data, or at least some of the data are read out from the database (DB1) and transmitted as the parameter to the web service, or both.

9. Programmable controller according to one of Patent Claims 7 to 8,
**characterized in that**
the programmable controller (SPS) is configured so that the initiated execution of the program module (FC1, FC2) is carried out as soon as a run of the automation program has reached a checkpoint or a cycle of the automation program has reached a defined state, in particular a cycle start or a cycle end.

10. Programmable controller according to one of Patent Claims 7 to 9,
**characterized in that**
the programmable controller (SPS) is adapted to interrupt a part of the automation program running at this time in order to execute the program module (FC1, FC2).

11. Programmable controller according to one of Patent Claims 7 to 10,
**characterized in that**
the web server is adapted for communication with a web browser or an application of a mobile terminal or of a cloud-based service as the client (CL).

12. Programmable controller according to one of Patent Claims 7 to 11,
**characterized in that**
the database (DB1) is a data module of the automation program.

## Revendications

1. Procédé d'accès à des données ou des fonctions d'un automate (SPS) programmable au moyen d'un protocole de réseau,
dans lequel les données sont mises en mémoire dans une base (DB1) de données de l'automate (SPS) programmable et la base (DB1) de données est associée à un programme d'automatisation de l'automate (SPS) programmable, et
dans lequel il est accédé par un client (CL) à un serveur web de l'automate (SPS) programmable au moyen du protocole de réseau,
dans lequel il est associé au moins un mobile (FC1, FC2) du programme d'automatisation de l'automate (SPS) programmable à un service web du serveur (WS) web,
dans lequel on lance, par le service web, une exécution du module (FC1, FC2) de programme,
dans lequel il est décidé, par un dispositif (VE) de gestion de l'automate (SPS) programmable, si l'appel lancé du module (FC1, FC2) de programme doit être effectué ou ne doit pas l'être, et dans lequel on prend la décision en utilisant à plein l'automate (SPS) programmable.

2. Procédé suivant la revendication 1,
**caractérisé**
**en ce qu'**il s'effectue, par le module (FC1, FC2) de programme, un accès aux données de l'automate (SPS) programmable,
dans lequel on écrit dans la base (DB1) de données, comme données, au moins un paramètre mis à disposition par le service web, ou on lit les données dans la base (DB1) de données et on les transmet comme paramètre au service web, ou les deux.

3. Procédé suivant l'une des revendications précédentes,
**caractérisé**
**en ce que** l'exécution du module (FC1, FC2) de programme, dans le cas d'un lancement, s'effectue dès qu'un déroulement du programme d'automatisation a atteint un point de contrôle ou un état défini, notamment un début de cycle ou une fin de cycle.

4. Procédé suivant l'une des revendications précédentes,
**caractérisé**
**en ce que**, pour exécuter le module (FC1, FC2) de programme, on interrompt une partie se déroulant à cet instant du programme d'automatisation.

5. Procédé suivant l'une des revendications précédentes,
**caractérisé**
**en ce que** le client (CL) utilise un navigateur web ou une application pour un terminal mobile ou un service reposant sur le Cloud.

6. Procédé suivant l'une des revendications précédentes,
**caractérisé**
**en ce que** la base (DB1) de données utilise un module de données du programme d'automatisation.

7. Automate programmable ayant accès à des données ou à des fonctions au moyen d'un protocole de réseau, les données étant mémorisées dans une base (DB1) de données de l'automate (SPS) programmable et la base (DB1) de données étant associée à un programme d'automatisation de l'automate (SPS) programmable, et dans lequel l'automate (SPS) programmable a un serveur web pour accéder aux données ou aux fonctions,
dans lequel l'automate (SPS) programmable est conçu pour associer au moins un module (FC1, FC2) du programme d'automatisation à un service web du serveur web,
dans lequel le service web est configuré pour lancer l'exécution du module (FC1, FC2) de programme,
en ce que l'automate (SPS) programmable a un dispositif (VE) de gestion,
dans lequel le dispositif (VE) de gestion est conçu pour effectuer ou valider l'appel lancé du module (FC1, FC2) de programme ou ne pas le faire, et en ce que le dispositif (VE) de gestion est conçu pour prendre la décision sur l'appel du module (FC1, FC2) de programme en utilisant à plein l'automate (SPS) de programmable.

8. Automate programmable suivant la revendication 7, **caractérisé**
**en ce que** le module (FC1, FC2) de programme est conçu pour accéder aux données,
dans lequel il est prévu qu'au moins un paramètre mis à disposition par le service web soit écrit comme données dans la base (DB1) de données, ou qu'au moins une partie des données soient lues dans la base (DB1) de données et soient transmises comme paramètre au service web ou les deux.

9. Automate programmable suivant l'une des revendications 7 à 8,
**caractérisé**
**en ce que** l'automate (SPS) programmable est conçu de manière à effectuer l'exécution lancée du module (FC1, FC2) de programme, dès qu'un déroulement du programme d'automatisation a atteint un point de contrôle ou qu'un cycle du programme d'automatisation a atteint un état défini, notamment un début de cycle ou une fin de cycle.

10. Automate programmable suivant l'une des revendications 7 à 9,
**caractérisé**
**en ce que** l'automate (SPS) programmable est, pour l'exécution du module (FC1, FC2) de programme, conçu pour interrompre une partie se déroulant à cet instant du programme d'automatisation.

11. Automate programmable suivant l'une des revendications 7 à 10,
**caractérisé**
**en ce que** le serveur web est conçu pour communiquer avec un navigateur web ou avec une application d'un terminal mobile ou d'un service reposant sur le Cloud comme client (CL).

12. Automate programmable suivant l'une des revendications 7 à 11,
**caractérisé**
**en ce que** la base (DB1) de données est un module de données du programme d'automatisation.
